(19) **Europäisches Patentamt / European Patent Office / Office européen des brevets**

(11) **EP 4 421 448 A1**

(12) # EUROPEAN PATENT APPLICATION
published in accordance with Art. 153(4) EPC

(43) Date of publication:
**28.08.2024 Bulletin 2024/35**

(21) Application number: **23851884.9**

(22) Date of filing: **09.08.2023**

(51) International Patent Classification (IPC):
**G01C 11/02** (2006.01)

(52) Cooperative Patent Classification (CPC):
**Y02E 30/30**

(86) International application number:
**PCT/CN2023/112025**

(87) International publication number:
**WO 2024/032663 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 CN 202210962801**

(71) Applicant: **Shenzhen University**
**Shenzhen, Guangdong 518060 (CN)**

(72) Inventors:
• **ZHANG, Dejin**
**Shenzhen, Guangdong 518060 (CN)**

• **LI, Qingquan**
**Shenzhen, Guangdong 518060 (CN)**
• **HE, Li**
**Shenzhen, Guangdong 518060 (CN)**
• **TIAN, Lin**
**Shenzhen, Guangdong 518060 (CN)**
• **GUAN, Minglei**
**Shenzhen, Guangdong 518060 (CN)**
• **ZHANG, Zhongyuan**
**Shenzhen, Guangdong 518060 (CN)**
• **MA, Huachuan**
**Shenzhen, Guangdong 518060 (CN)**

(74) Representative: **Boult Wade Tennant LLP**
**Salisbury Square House**
**8 Salisbury Square**
**London EC4Y 8AP (GB)**

(54) **UNDERWATER PHOTOGRAMMETRY-BASED METHOD FOR MEASUREMENT DURING DOCKING OF IMMERSED TUBE SEGMENTS**

(57) An underwater photogrammetry-based method for measurement during docking of immersed tube segments, comprising: determining segment coordinates of a plurality of sets of underwater photogrammetry systems in a segment coordinate system (101); in the segment coordinate system, determining a standard included angle between a connecting line of the segment coordinates of an underwater photogrammetry device and the central axis of a segment to be immersed (102); on the basis of the segment coordinates, determining, in a construction coordinate system, actual coordinates of the underwater photogrammetry device, theoretical coordinates of said segment, theoretical coordinates of the underwater photogrammetry device, and theoretical central axis coordi- nates of said segment (103); on the basis of at least one of the actual coordinates of the underwater photogrammetry device, the theoretical coordinates of said seg- ment, the theoretical coordinates of the underwater photogrammetry device, and the theoretical central axis co- ordinates of said segment, the standard included angle, and preset precision parameters required for immersion of said segment, determining adjustment parameters for immersion and docking of said segment (104); and ac- cording to the adjustment parameters, controlling and adjusting said segment to be docked with a target docking segment (105).

EP 4 421 448 A1

Determine segment coordinates of a plurality of sets of underwater photogrammetry systems in a segment coordinate system

101

Determine, in the segment coordinate system, a standard included angle between a connecting line of the segment coordinates of the underwater photogrammetry device and a central axis of the segment to be immersed

102

Determine, in a construction coordinate system, actual coordinates of the underwater photogrammetry device, theoretical coordinates of the segment to be immersed, theoretical coordinates of the underwater photogrammetry device, and theoretical central axis coordinates of the segment to be immersed on the basis of the segment coordinates

103

Determine adjustment parameters for immersion and docking of the segment to be immersed on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle and preset precision parameters required for immersion of the segment to be immersed

104

Control and adjust, according to the adjustment parameters, the segment to be immersed to be docked with the target docking segment.

105

FIG. 1

## Description

### CROSS REFERENCE

This application claims priority to Chinese Patent Application No. 202210962801.0 filed on August 11, 2022, entitled "Underwater photogrammetry-based method for measurement during docking of immersed tube segments", the entirety of which is incorporated herein by reference.

### TECHNICAL FIELD

This application relates to the field of marine surveying and mapping, in particular to an underwater photogrammetry-based method for measurement during docking of immersed tube segments.

### BACKGROUND

In related art, immersed tube tunnel construction adopts a construction method in which segments are prefabricated in a factory and floating-transported to the site for immersion and docking. The immersion and installation of segments is a key to immersed tube tunnel construction, the immersion and docking of segments requires that the segments to be immersed and the segments that have been immersed underwater maintain a correct position and pose, especially the linear precision after docking, which requires precise measurements of the position and pose of underwater segments.

Currently, the measurement of underwater position of segments mainly utilizes the Global Navigation Satellite System (GNSS), which is installed on the top of a measuring-tower at the head and tail ends of the segments, for measurement, and the axis direction of segments is determined by performing differential calculation of two coordinates measured by two towers, thereby converting underwater measurement and positioning into above-water measurement and positioning. Due to the impact of seawater flow, a measuring-tower may be deformed by the impact of water flow, and the height of a measuring-tower is generally no more than 45 meters, which results in certain defects in the docking and installation of segments in terms of water depth applicability, construction safety, docking precision, and operation efficiency and the like, therefore, the installation and positioning without a measuring-tower is a future development trend.

In summary, the precision of docking, installation and positioning of segments cannot be guaranteed without a measuring-tower in the related art.

### SUMMARY

Embodiments of this application provide an underwater photogrammetry-based method for measurement during docking of immersed tube segments, which can solve the problem that the precision of docking, installation and positioning of segments cannot be guaranteed without a measuring-tower in the related art.

Embodiments of this application provide an underwater photogrammetry-based method for measurement during docking of immersed tube segments, comprising: determining segment coordinates of a plurality of sets of underwater photogrammetry systems in a segment coordinate system, wherein the underwater photogrammetry system comprises an underwater photogrammetry device and a measurement cooperative target, the underwater photogrammetry device is installed onto a segment to be immersed, and the measurement cooperative target is installed onto a target docking segment; in the segment coordinate system, determining a standard included angle between a connecting line of the segment coordinates of the underwater photogrammetry device and the central axis of the segment to be immersed; on the basis of the segment coordinates, determining, in a construction coordinate system, actual coordinates of the underwater photogrammetry device, theoretical coordinates of the segment to be immersed, theoretical coordinates of the underwater photogrammetry device, and theoretical central axis coordinates of the segment to be immersed; on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle, and preset precision parameters required for immersion of the segment to be immersed, determining adjustment parameters for immersion and docking of the segment to be immersed, wherein the adjustment parameters comprise the rotation angle and/or translation amount of the segment to be immersed; and according to the adjustment parameters, controlling and adjusting the segment to be immersed to be docked with the target docking segment.

Optionally, the measurement points of the measurement cooperative target are center points of a non-directional light source, and a certain distance is kept between the measurement points of the measurement cooperative target such that the light spots generated by the light source in water will not fuse within the measurement range; the relationship between the measurement points of the measurement cooperative target is pre-calibrated; and the segment coordinates of the measurement points of the measurement cooperative target in the segment coordinate system are determined by a control network.

In embodiments of this application, by determining segment coordinates of a plurality of sets of underwater photogrammetry systems in a segment coordinate system, wherein the underwater photogrammetry system comprises an underwater photogrammetry device and a measurement cooperative target, the underwater photogrammetry device is installed onto a segment to be immersed, and the measurement cooperative target is installed onto a target docking segment; in the segment coordinate system, determining a standard included angle between a connecting line of the segment coordinates of the underwater photogrammetry device and the central axis of the segment to be immersed; on the basis of the segment coordinates, determining, in a construction coordinate system, actual coordinates of the underwater photogrammetry device, theoretical coordinates of the segment to be immersed, theoretical coordinates of the underwater photogrammetry device, and theoretical central axis coordinates of the segment to be immersed; on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle, and preset precision parameters required for immersion of the segment to be immersed, determining adjustment parameters for immersion and docking of the segment to be immersed, wherein the adjustment parameters comprise the rotation angle and/or translation amount of the segment to be immersed; and according to the adjustment parameters, controlling and adjusting the segment to be immersed to be docked with a target docking segment, using a measuring-tower is avoided to measure the underwater pose of the segments during docking of segments, and thus using a measuring-tower is avoided to measure the underwater pose of the segments, thereby avoiding the problems of limited water depth, impact on precision by deformation, high cost, and low operation efficiency that exist in underwater docking using a measuring-tower, which solves the problem that the precision of docking, installation and positioning of segments cannot be guaranteed without a measuring-tower in the related art.

## BRIEF DESCRIPTION OF DRAWINGS

Fig. 1 is a schematic flowchart of an underwater photogrammetry-based method for measurement during docking of immersed tube segments provided in embodiments of this application;

Fig. 2 is a schematic diagram of an underwater photogrammetry-based method for measurement during docking of immersed tube segments provided in embodiments of this application;

Fig. 3 is a schematic diagram of a cooperative target provided in embodiments of this application;

Fig. 4 is a schematic diagram of a measurement device provided in embodiments of this application; and

Fig. 5 is a schematic diagram of determining adjustment parameters provided in embodiments of this application.

## DETAILED DESCRIPTION

Technical solutions in embodiments of the application will be described clearly and thoroughly below with reference to the accompanying drawings in embodiments of this application. Obviously, the embodiments described are part of the embodiments of this application rather than all of the embodiments. All other embodiments obtained by those skilled in the art without creative work based on embodiments in this application fall within the scope as claimed by this application.

The expression "and/or" in the description and claims of this application indicates at least one of the objects connected therewith, and the character "/" generally indicates that the objects associated therewith are in an "or" relationship.

With reference to the accompanying drawings, the underwater photogrammetry-based method for measurement during docking of immersed tube segments as provided by embodiments of this application will be described below in detail by specific embodiments and application scenarios thereof.

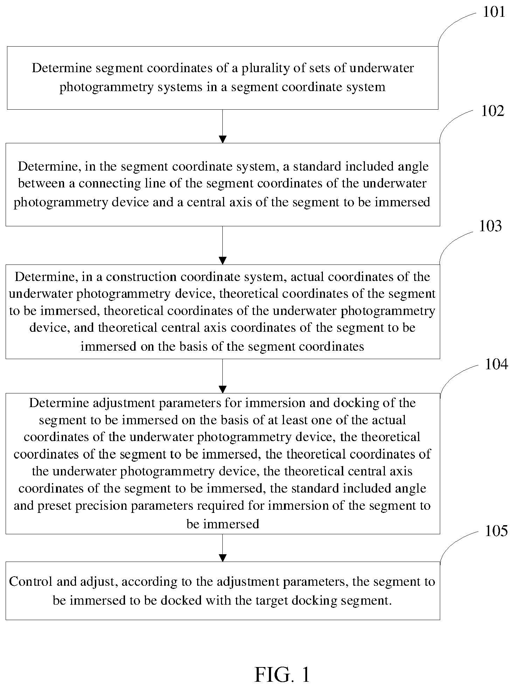

Fig. 1 illustrates an underwater photogrammetry-based method for measurement during docking of immersed tube segments provided in one embodiment of this application, the method may be executed by an electronic device, the electronic device can comprise: a server and/or a terminal device. In other words, the method can be executed by a software or hardware installed on the electronic device, and the method comprises the following steps.

At step 101: segment coordinates of a plurality of sets of underwater photogrammetry systems are determined in a segment coordinate system.

Wherein the underwater photogrammetry system comprises an underwater photogrammetry device and a measurement cooperative target, the underwater photogrammetry device is installed onto a segment to be immersed, and the measurement cooperative target is installed onto a target docking segment. The target segment is the segment to be docked that has been immersed underwater.

The above-mentioned plurality of sets of underwater photogrammetry devices are installed at appropriate positions at the top of the docking end of the segments to be immersed, the underwater photogrammetry device may be connected to the top of the segments through a base, which maintains sufficient distance between underwater photogrammetry devices. For example, if two sets of underwater photogrammetry devices are to be installed, they can be installed in the outermost side of the docking end, so as to form a long baseline for measurement.

The measurement cooperative target may use an active, passive or active and passive combined target, the active target is composed of a plurality of controllable lights, and the passive target is composed of a plurality of reflective signs which are arranged according to a certain shape. There are a plurality of measurement points of each measurement cooperative target, and the points are distributed according to certain rules for matching and identification; the active light source adopts a strobe mode, when the active light source is on, the target is an active light source target; and the passive target employs a highly reflective material, targets can be distinguished by preset target arrangements.

Each measurement cooperative target may have a plurality of measurement points, and each measurement point may have independent segment coordinates, coordinates in a construction coordinate system can be obtained by break-through survey.

The measurement points of the measurement cooperative target are center points of the active/passive light source; and a predetermined distance is maintained between the plurality of measurement points of the measurement cooperative target such that the light spots generated by the light source in water will not fuse within the measurement range; the relationship between the plurality of measurement points of the measurement cooperative target is pre-calibrated; and the segment coordinates of the plurality of measurement points of the measurement cooperative target in the segment coordinate system are determined by a control network.

It can be appreciated that, since underwater measurement is affected by environmental factors such as underwater plankton, fish eggs, and impurities in water, etc., the active light source can, on one hand, expand the measurement range and, on the other hand, reduce the impact of the above factors. In addition, due to the impact of environmental factors, there are situations where measurement points cannot be completely measured, whereas at least 3 measurement points are required for resection, and measurement cooperative targets with more than 3 measurement points are beneficial for reducing the impact of environmental factors. In addition, considering the large error in extracting center points by the active light source, measurement points of the passive light source may be arranged on the same measurement cooperative target, at close range or under sound water quality conditions, the passive target has higher measurement precision than the active target, moreover, the distance between two immersed tubes gets smaller and smaller during the docking of the immersed tubes, which is beneficial for leveraging the advantages of passive targets. Finally, due to the lack of directivity in a scattered light source, a light spot is formed in water, when a camera is close to the target, there may be spot fusion due to exposure, and maintaining a certain distance between measurement points can effectively prevent this phenomenon from occurring.

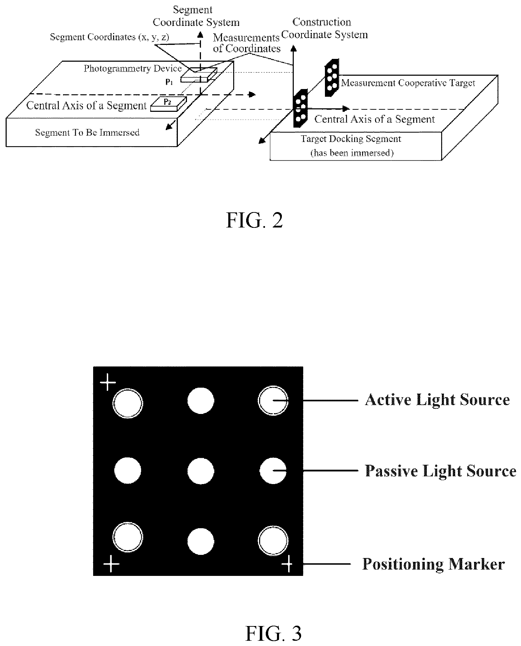

As a specific example, Fig. 2 shows an example diagram of an underwater photogrammetry-based method for measurement during docking of immersed tube segments, the measurement may be accomplished by two underwater photogrammetry systems $p_1$ and $p_2$, each underwater photogrammetry system may comprise an underwater photogrammetry device and a measurement cooperative target, wherein each underwater photogrammetry device consists of two cameras. The segment coordinates of the two cameras may be determined by photographing the measurement points of the cooperative target by each camera.

Optionally, when the measurement cooperative target is being installed, a crosshair marker (positioning marker) can be set up on the cooperative target as shown in Fig. 3, a prism may be used to position the crosshair, and the pose of the prism may be measured by an engineering survey method; further, the back side of the measurement cooperative target may be set as the coordinate plane, the horizontal direction of the back side of the measurement cooperative target may be set as the X-axis, the direction perpendicular to the horizontal direction of the back side of the measurement cooperative target may be set as the Y-axis, and the front direction of the measurement cooperative target may be set as the Z-axis, in this way, the coordinate system consisting of the above-mentioned X-axis, Y-axis and Z-axis may be determined as a segment coordinate system $O(x_c, y_c, z_c)$ of the target docking segment, such that the four measuring points of the crosshair are on the X-axis and the Y-axis.

The positions of prisms and measurement points in a station coordinate system $O(x_s, y_s, z_s)$ may be obtained in a laboratory by methods such as total stations, trackers, or photogrammetry.

Then the relationship between the coordinates in the station coordinate system and the coordinates in the segment coordinate system can be determined by the following equation (1):

$$\begin{bmatrix} x_s \\ y_s \\ z_s \end{bmatrix} = R_{sc} \begin{bmatrix} x_c \\ y_c \\ z_c \end{bmatrix} + T_{sc}; \qquad (1)$$

wherein $R_{sc}$ and $T_{sc}$ are coordinates measured by relevant technical personnel through actual measurement in the station coordinate system and the segment coordinate system respectively, and then a pose matrix (that is, a coordinate transformation matrix) of coordinates in the station coordinate system and coordinates in the calibration coordinate system can be obtained.

Optionally, prior to step S101, the method further comprises establishing a segment coordinate system.

At step 102: in the segment coordinate system, a standard included angle between a connecting line of the segment coordinates of an underwater photogrammetry device and the central axis of a segment to be immersed is determined.

On the basis of the segment coordinates, the included angle between the connecting line of the segment coordinates of the underwater photogrammetry device on the segment to be immersed and the central axis of the segment to be immersed may be calculated, and a plurality of included angles can be calculated for a plurality of pairs of segment coordinates, which is taken as the standard included angle.

It can be appreciated that, under the condition that the segment does not deform and the underwater photogrammetry device does not change, the standard included angle does not change.

At step 103: on the basis of the segment coordinates, actual coordinates of the underwater photogrammetry device, theoretical coordinates of the segment to be immersed, theoretical coordinates of the underwater photogrammetry device, theoretical central axis coordinates of the segment to be immersed and actual coordinates of the measurement cooperative target are determined in a construction coordinate system.

The determined segment coordinates of the measurement points of the measurement cooperative target can be converted into coordinates in the construction coordinate system by a corresponding pose matrix, the pose matrix here may be obtained by break-through survey of the segment that has been immersed, for example, coordinates of the preset point in the segment coordinate system and coordinates of the preset point in the construction coordinate system are obtained by actual measurement, and then a transformation matrix of coordinates of the preset point in the segment coordinate system and coordinates of the preset point in the construction coordinate system may be determined, and the transformation matrix may be determined as the above-mentioned pose matrix.

Based on the theoretical position of the measurement cooperative target, the actual position of the target docking segment in the construction coordinate system is measured by break-through survey technique after the segment on which the measurement cooperative target is located has been immersed, the theoretical coordinates of the segment to be immersed can be calculated with reference to the design profile, thereby determining the theoretical coordinates of the underwater photogrammetry device and theoretical central axis coordinates of the segment to be immersed. The included angle between the connecting line of the theoretical coordinates of the underwater photogrammetry device and the theoretical central axis of the segment to be immersed need to be equal to the above-mentioned standard included angle corresponding to the underwater photogrammetry device, otherwise, it is required to obtain the theoretical value by break-through survey once again.

At step 104: on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle, and preset precision parameters required for immersion of the segment to be immersed, adjustment parameters for immersion and docking of the segment to be immersed are determined.

Wherein the adjustment parameters comprise the rotation angle and/or translation amount of the segment to be immersed.

At step 105: according to the adjustment parameters, the segment to be immersed is controlled and adjusted to be docked with a target docking segment.

In this way, in embodiments of this application, by determining segment coordinates of a plurality of sets of underwater photogrammetry systems in a segment coordinate system, wherein the underwater photogrammetry system comprises an underwater photogrammetry device and a measurement cooperative target, the underwater photogram metry device is installed onto a segment to be immersed, and the measurement cooperative target is installed onto a target docking segment; in the segment coordinate system, determining a standard included angle between a connecting line of the segment coordinates of the underwater photogrammetry device and the central axis of the segment to be immersed; on the basis of the segment coordinates, determining, in a construction coordinate system, actual coordinates of the underwater photogrammetry device, theoretical coordinates of the segment to be immersed, theoretical coordinates of the underwater photogrammetry device, theoretical central axis coordinates of the segment to be immersed, and actual coordinates of the measurement cooperative target; on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle, and preset precision parameters required for immersion of the segment to be immersed, determining adjustment parameters for immersion and docking of the segment to be immersed, wherein the adjustment parameters comprise the rotation angle and/or translation amount of the segment to be immersed; and according to the adjustment parameters, controlling and adjusting the segment to be immersed to be docked with a target docking segment, using a measuring-tower is avoided to measure the underwater pose of the segments during docking of segments, and thus using a measuring-tower is avoided to measure the underwater pose of the segments, thereby avoiding the problems of limited water depth, impact on precision by deformation, high cost, and low operation efficiency that exist in underwater docking using a measuring-tower, which solves the problem that the precision of docking, installation and positioning of segments cannot be guaranteed without a measuring-tower in the related art.

In an alternative implementation, each set of underwater photogrammetry device comprises two cameras; the segments coordinates of the underwater photogrammetry device comprise resection coordinates and forward intersection coordinates; determining segment coordinates of the underwater photogrammetry systems in a segment coordinate system, comprising: determining resection coordinates of each camera for photogrammetry of the measurement points of the measurement cooperative target; determining forward intersection coordinates of the two cameras for photogrammetry of the measurement points of the measurement cooperative target, and calculating segment coordinates of each camera.

The underwater photogrammetry device may be sealed waterproof with seals, the underwater photogrammetry device consists of two calibrated cameras, each camera may perform resection to calculate the projection center coordinates (i.e., the resection coordinates), the two cameras may be combined to perform forward intersection to calculate the projection center coordinates (i.e., forward intersection calculation), and at the same time, the distance from the projection center to the measurement cooperative target may be calculated by forward intersection.

In an alternative implementation, on the basis of the segment coordinates, determining, in a construction coordinate system, actual coordinates of the underwater photogrammetry device, comprising: converting the segment coordinates into the construction coordinate system by break-through survey; and combining the forward intersection coordinates with the resection coordinates in the construction coordinate system and determining the actual coordinates of the underwater photogrammetry device in the construction coordinate system.

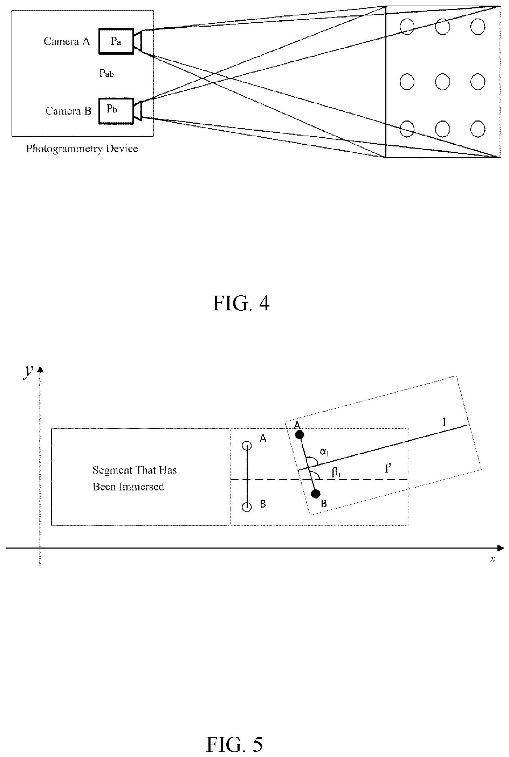

As shown in Fig. 4, each set of underwater photogrammetry device may calculate and output one reliable value as the actual coordinates of the underwater photogrammetry device, the calculation process is as follows.

The point observation values of the projection center of camera A $P_a$ and the projection center of camera B $P_b$ which are measured by photogrammetry satisfy equation (2):

$$\begin{cases} P_a(t) = P_a(t_0) + V_a(t) + N_a \\ P_b(t) = P_b(t_0) + V_a(t) + N_b \end{cases} \quad (2)$$

wherein $V_a(t)$ and $V_b(t)$ are relative vectors of displacement changes of the underwater photogrammetry device over the same time period. $N_a$ and $N_b$ are observation error correction amounts of each of the two cameras comprised in the underwater photogrammetry device, respectively.

At $t_0$ and t, the baseline observation equations of $P_a$ and $P_b$ are shown in the following equation (3).

$$\begin{cases} P_a(t) = P_b(t) + L + N_{ab} \\ P_a(t_0) = P_b(t_0) + L + N_{ab0} \end{cases} \quad (3)$$

wherein L is the relative position vector between the two cameras and is given by means of calibration by a binocular camera. $N_{ab}$ and $N_{ab0}$ are observation errors of the two camera baselines, and estimates thereof can be given by a photogrammetry error equation.

From the point observation equation, the following equation (4) is obtained:

$$P_a(t) + P_b(t_0) = P_a(t_0) + P_b(t) + N_a - N_b + V_a(t) - V_b(t) \quad (4)$$

From the baseline observation equation, the following equation (5) is obtained:

$$P_a(t) + P_b(t_0) = P_a(t_0) + P_b(t) + N_{ab} - N_{ab0} \quad (5)$$

That is,

$$N_a - N_b = N_{ab} - N_{ab0} + V_a(t) - V_b(t)$$

If it is in the time period $[t_0, t]$, the observation error estimate of the two camera baselines $N_{ab}$ - $N_{ab0}$ should be less than the threshold $f_0$. Otherwise, if the measurement error is greater than the allowable range at this moment, the result should be abandoned. When the observation error of the two camera baselines is less than the threshold, the following equation (6) is satisfied.

$$\begin{cases} N_a - N_b = N_{ab} - N_{ab0} + V_a(t) - V_b(t) \\ \frac{N_a}{N_b} = \frac{\delta_a}{\delta_b} \end{cases} \qquad (6)$$

When the observation error of point A $\delta_a$ is smaller than that of point B, the solution system outputs the corrected coordinates of point A according to the following equation (7).

$$P = P_a(t) + N_a \qquad (7)$$

Otherwise, the corrected coordinates of point B are output according to the following equation (8).

$$P = P_b(t) + N_b \qquad (8)$$

Optionally, if the distance obtained by the forward intersection measurement remains unchanged, it indicates repeated sampling, sequence data is obtained for both A and B respectively, then the representative value of this period can be obtained by least squares or simple averaging, as shown in the following equation (9).

$$\begin{cases} x = \sum_{t=0}^{t=n} (x) / \mathrm{n} \\ y = \sum_{t=0}^{t=n} (y) / \mathrm{n} \end{cases} \qquad (9)$$

In this way, the actual coordinates of the underwater photogrammetry device can be determined.

In an alternative implementation, determining a standard included angle between a connecting line of the segment coordinates of the underwater photogrammetry device and the central axis of the segment to be immersed, comprising: performing differential calculation on the segment coordinates of any two sets of underwater photogrammetry devices; determining a result of differential calculation as the standard included angle between a connecting line of the segment coordinates of any two sets of underwater photogrammetry devices and the central axis of the segment to be immersed.

The number of standard included angles corresponding to the underwater photogrammetry system is associated with the number of underwater photogrammetry devices, for example, there can be four standard included angles for two sets of underwater photogrammetry devices (each set of underwater photogrammetry device has two segment coordinates, thus the connecting line of the segment coordinates of two sets of underwater photogrammetry devices and the central axis of the segment to be immersed can form four included angles). But in general, the segment coordinates of the two sets of underwater photogrammetry devices farthest away from each other are used to calculate the standard included angle, and the rest are used as backup, calculation verification or point offset calculation.

A plurality of standard included angles in the construction coordinate system may be calculated by differential calculation, such that the measurement error caused by impact of water body can be eliminated by a differential method, thereby improving the precision of the measured orientation.

In an alternative implementation, the adjustment parameters comprise the rotation angle of the segment to be immersed; and on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle and preset precision parameters required for immersion of the segment to be immersed, determining adjustment parameters for immersion and docking of the segment to be immersed, comprising: determining a target included angle between a connecting line of the actual coordinates of any two sets of underwater photogrammetry devices and the theoretical central axis of the segment to be immersed; taking the difference between the target included angle and the standard included angle corresponding to any two sets of underwater photogrammetry devices as an angle to be rotated, and/or determining an included angle between a connecting line of the actual coordinates of any two sets of underwater photogrammetry devices and a connecting line of the theoretical coordinates of any two sets of underwater photogrammetry devices as an angle to be rotated; when the angle to be rotated does not meet preset precision parameters, determining the angle to be rotated as a rotation angle of the segment to be immersed; when the angle to be rotated meets preset precision parameters, determining a rotation angle of the segment to be immersed as 0 or determining that it meets the error setting requirements.

According to the distance that the tail end of the segment to be immersed is allowed to deviate from the ideal profile, the preset precision parameters corresponding to the rotation angle can be calculated, assuming that the length of the segment to be immersed is L, the width is W, and the distance deviates from the ideal profile is S, then: $\Delta d = WS/L$, thus the maximum allowable angle difference $\Delta d$ can be calculated, and the maximum allowable angle difference can be used as preset precision parameter corresponding to the rotation angle.

If a plurality of sets of underwater photogrammetry device are installed, the highest priority is given to the two sets of underwater photogrammetry devices that are farthest away from each other for calculation of adjustment parameters.

As a specific example, as shown in Fig. 5, I is the central axis of the segment to be immersed in the segment coordinate system, $\alpha_i$ is the standard included angle corresponding to a underwater photogrammetry device A and a underwater photogrammetry device B, and the included angle between a connecting line of the coordinates of the underwater photogrammetry device A and the coordinates of the underwater photogrammetry device B and the theoretical central axis of the segment to be immersed can be calculated by the following equation (10):

$$\beta_i = \sin^{-1}(y_B - y_A)/(x_B - x_A) \qquad (10)$$

when the absolute value of the angle to be rotated $\Delta \Theta = \alpha_i - \beta_i$ is greater than the maximum allowable angle difference, the segment to be immersed is considered not parallel to the target docking segment at this moment, and the segment to be immersed needs to be rotated according to the angle to be rotated, such that the segment to be immersed is parallel to the target docking segment; when the absolute value of this difference is less than the maximum allowable angle difference , the segment to be immersed is considered parallel to the target docking segment at this moment, and there is no need to rotate the segments to be immersed.

In this way, the rotation angle of the segment to be immersed and the target docking segment can be determined.

In an alternative implementation, the adjustment parameters comprise the translation amount of the segment to be immersed; on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle and preset precision parameters required for immersion of the segment to be immersed, determining adjustment parameters for immersion and docking of the segment to be immersed, comprising: determining a difference between the actual coordinates of the underwater photogrammetry device and the theoretical coordinates of the underwater photogrammetry device on respective coordinate axis as the amount to be translated on respective coordinate axis by the segment to be immersed; when the amount to be translated does not meet preset precision parameters, determining the amount to be translated as translation amount of the segment to be immersed; when the amount to be translated meets preset precision parameters, determining the translation amount of the segment to be immersed as 0 or determining that it meets the error setting requirement.

In this way, the translation amount of the segment to be immersed and the target docking segment can be determined.

It should be noted that, as used herein, the terms "include", "comprise" or any other variations thereof are intended to cover a non-exclusive inclusion, such that a process, method, article, or apparatus that comprises a series of elements not only comprises those elements, but also comprises other elements that are not explicitly listed, or further comprises elements that are inherent to the process, method, article, or apparatus. Without further limitations, an element limited by "comprising a..." does not exclude the presence of other identical elements in the process, method, article, or apparatus that comprises the element. In addition, it should be noted that the scope of the method and device in embodiments of this application is not restricted to perform functions in the order shown or discussed, but may also include performing functions in a substantially simultaneous manner or in an opposite order according to the functions involved, for example, the described methods may be performed in a different order than described, and various steps may be added, omitted, or combined. Additionally, features described with reference to certain examples can be combined in other examples.

With the description of the above implementations, those skilled in the art can clearly understand that the above implementation methods can be accomplished by means of software and necessary general hardware platforms, as well as hardware, and the former is the preferred implementation in many cases. Based on such understanding, the technical solution of this application essentially or the part contributing to the prior art may be embodied in the form of a software product, the computer software product is stored in a storage medium (such as a ROM/RAM, a magnetic disk, and an optical disk), and comprises a number of instructions for instructing a terminal (which may be a mobile phone, a computer, a server, an air conditioner, or a network device) to execute the methods described in various embodiments of this application.

The embodiments of the application are described above in conjunction with the accompanying drawings, but the application is not limited to the above-mentioned particular embodiments that are merely illustrative rather than limiting, a wide variety of forms can be made by a person skilled in the art under teachings of the application without departing from the spirit and scope of the application, and such forms all fall within the scope of the claims.

**Claims**

1. An underwater photogrammetry-based method for measurement during docking of immersed tube segments, comprising:

   determining segment coordinates of a plurality of sets of underwater photogrammetry systems in a segment coordinate system, wherein the underwater photogrammetry system comprises an underwater photogrammetry device and a measurement cooperative target, the underwater photogrammetry device is installed onto a segment to be immersed, and the measurement cooperative target is installed onto a target docking segment;
   determining, in the segment coordinate system, a standard included angle between a connecting line of the segment coordinates of the underwater photogrammetry device and a central axis of the segment to be immersed;
   determining, in a construction coordinate system, actual coordinates of the underwater photogrammetry device, theoretical coordinates of the segment to be immersed, theoretical coordinates of the underwater photogrammetry device, and theoretical central axis coordinates of the segment to be immersed on the basis of the segment coordinates;
   determining adjustment parameters for immersion and docking of the segment to be immersed on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle and preset precision parameters required for immersion of the segment to be immersed, wherein the adjustment parameters comprise a rotation angle and/or a translation amount of the segment to be immersed; and
   controlling and adjusting, according to the adjustment parameters, the segment to be immersed to be docked with the target docking segment.

2. The underwater photogrammetry-based method for measurement during docking of immersed tube segments according to claim 1, wherein each measurement cooperative target has a plurality of measurement points thereon;

   the measurement point on the measurement cooperative target is a center point of a non-directional active or passive light source;
   a predetermined distance is kept between the plurality of measurement points of the measurement cooperative target;
   a relationship between the plurality of measurement points of the measurement cooperative target is pre-calibrated; and
   segment coordinates of the plurality of measurement points of the measurement cooperative target in the segment coordinate system are determined by a control network.

3. The underwater photogrammetry-based method for measurement during docking of immersed tube segments according to claim 1 or 2, wherein each set of underwater photogrammetry device comprises two cameras;

the segment coordinates of the underwater photogrammetry device comprise resection coordinates and forward intersection coordinates; and

determining the segment coordinates of the underwater photogrammetry devices in the segment coordinate system, comprising:

determining the segment coordinates of the plurality of measurement points of the measurement cooperative target in the segment coordinate system by a control network;

determining resection coordinates of each camera for photogrammetry of the measurement points of the measurement cooperative target;

determining forward intersection coordinates of the two cameras for photogrammetry of the measurement points of the measurement cooperative target, and calculating segment coordinates of each camera; and

determining the resection coordinates and the forward intersection coordinates, and calculating the segments coordinates of the two cameras.

4. The underwater photogrammetry-based method for measurement during docking of immersed tube segments according to claim 3, wherein determining, in the construction coordinate system, the actual coordinates of the underwater photogrammetry device on the basis of the segment coordinates, comprising:

converting the segment coordinates of the measurement cooperative target into the construction coordinate system by break-through survey; and

combining the forward intersection coordinates with the resection coordinates in the construction coordinate system, and determining the actual coordinates of the underwater photogrammetry device in the construction coordinate system.

5. The underwater photogrammetry-based method for measurement during docking of immersed tube segments according to any one of claims 1 to 4, wherein determining the standard included angle between the connecting line of the segment coordinates of the underwater photogrammetry device and the central axis of the segment to be immersed, comprising:

performing differential calculation on the segment coordinates of any two sets of underwater photogrammetry devices; and

determining a result of differential calculation as the standard included angle between a connecting line of the segment coordinates of the any two sets of underwater photogrammetry devices and the central axis of the segment to be immersed.

6. The underwater photogrammetry-based method for measurement during docking of immersed tube segments according to any one of claims 1 to 5, wherein the adjustment parameters comprise the rotation angle of the segment to be immersed;

determining the adjustment parameters for immersion and docking of the segment to be immersed on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle, and the preset precision parameters required for immersion of the segment to be immersed, comprising:

determining a target included angle between a connecting line of the actual coordinates of any two sets of underwater photogrammetry devices and the theoretical central axis of the segment to be immersed;

taking a difference between the target included angle and the standard included angle corresponding to the any two sets of underwater photogrammetry device as an angle to be rotated, and/or determining an included angle between a connecting line of the actual coordinates of any two sets of underwater photogrammetry devices and a connecting line of the theoretical coordinates of any two sets of underwater photogrammetry devices as the angle to be rotated;

determining, upon the condition that the angle to be rotated does not meet preset precision parameters, the angle to be rotated as the rotation angle of the segment to be immersed; and

determining, upon the condition that the angle to be rotated meets preset precision parameters, a rotation angle of the segment to be immersed to be 0 or meet an error setting requirement.

7. The underwater photogrammetry-based method for measurement during docking of immersed tube segments according to any one of claims 1 to 6, wherein the adjustment parameters comprise the translation amount of the segment to be immersed;

determining the adjustment parameters for immersion and docking of the segment to be immersed on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle and the preset precision parameters required for immersion of the segment to be immersed, comprising:

determining a difference between the actual coordinates of the underwater photogrammetry device and the theoretical coordinates of the underwater photogrammetry device on each coordinate axis as an amount to be translated of the segment to be immersed on each coordinate axis;

determining, upon the condition that the amount to be translated does not meet preset precision parameters, the amount to be translated as the translation amount of the segment to be immersed; and

determining, upon the condition that the amount to be translated meets preset precision parameters, the translation amount of the segment to be immersed to be 0 or meet an error setting requirement.

101

Determine segment coordinates of a plurality of sets of underwater photogrammetry systems in a segment coordinate system

102

Determine, in the segment coordinate system, a standard included angle between a connecting line of the segment coordinates of the underwater photogrammetry device and a central axis of the segment to be immersed

103

Determine, in a construction coordinate system, actual coordinates of the underwater photogrammetry device, theoretical coordinates of the segment to be immersed, theoretical coordinates of the underwater photogrammetry device, and theoretical central axis coordinates of the segment to be immersed on the basis of the segment coordinates

104

Determine adjustment parameters for immersion and docking of the segment to be immersed on the basis of at least one of the actual coordinates of the underwater photogrammetry device, the theoretical coordinates of the segment to be immersed, the theoretical coordinates of the underwater photogrammetry device, the theoretical central axis coordinates of the segment to be immersed, the standard included angle and preset precision parameters required for immersion of the segment to be immersed

105

Control and adjust, according to the adjustment parameters, the segment to be immersed to be docked with the target docking segment.

FIG. 1

FIG. 2

FIG. 3

FIG. 4

FIG. 5

## INTERNATIONAL SEARCH REPORT

| International application No. |
|---|
| **PCT/CN2023/112025** |

**A. CLASSIFICATION OF SUBJECT MATTER**

G01C11/02(2006.01)i

According to International Patent Classification (IPC) or to both national classification and IPC

**B. FIELDS SEARCHED**

Minimum documentation searched (classification system followed by classification symbols)

IPC: G01C11, G01B11, G06T7, G01C15

Documentation searched other than minimum documentation to the extent that such documents are included in the fields searched

Electronic data base consulted during the international search (name of data base and, where practicable, search terms used)

CNTXT, ENTXTC, VEN: 水下, 摄影, 沉管, 测量, 靶标, 坐标, 参数, 旋转, 角度, 平移, underwater, photography, measur+, tube, pipe, target, coordinate, parameter, rotation, angle, translation

**C. DOCUMENTS CONSIDERED TO BE RELEVANT**

| Category* | Citation of document, with indication, where appropriate, of the relevant passages | Relevant to claim No. |
|---|---|---|
| PX | CN 115371639 A (SHENZHEN UNIVERSITY) 22 November 2022 (2022-11-22) claims 1-7 | 1-7 |
| PY | CN 115077487 A (SHENZHEN UNIVERSITY) 20 September 2022 (2022-09-20) description, paragraphs 0037-0069, and figures 1-8 | 1-7 |
| PY | CN 115790539 A (SHENZHEN UNIVERSITY) 14 March 2023 (2023-03-14) description, paragraphs 0043-0190, and figures 1-8 | 1-7 |
| PY | CN 116147582 A (SHENZHEN UNIVERSITY) 23 May 2023 (2023-05-23) description, paragraphs 0019-0114, and figures 1a-4 | 1-7 |
| X | CN 114322777 A (CCCC FIRST HARBOR ENGINEERING COMPANY LTD. et al.) 12 April 2022 (2022-04-12) description, paragraphs 0044-0077, and figures 1-6 | 1-7 |
| A | JP 2009097985 A (ENZAN KOBO KK) 07 May 2009 (2009-05-07) entire document | 1-7 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 October 2023** | **07 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/112025** |

**C.    DOCUMENTS CONSIDERED TO BE RELEVANT**

| Category* | Citation of document, with indication, where appropriate, of the relevant passages | Relevant to claim No. |
|---|---|---|
| A | CN 116625240 A (CCCC FIRST HARBOR ENGINEERING COMPANY LTD. et al.) 22 August 2023 (2023-08-22)<br>      entire document | 1-7 |
| A | CN 107610178 A (BEIJING AEROSPACE INSTITUTE FOR METROLOGY AND MEASUREMENT TECHNOLOGY et al.) 19 January 2018 (2018-01-19)<br>      entire document | 1-7 |
| A | CN 113409285 A (SHANGHAI JIAO TONG UNIVERSITY) 17 September 2021 (2021-09-17)<br>      entire document | 1-7 |
| A | CN 113160331 A (AEROSPACE INFORMATION RESEARCH INSTITUTE, CHINESE ACADEMY OF SCIENCES et al.) 23 July 2021 (2021-07-23)<br>      entire document | 1-7 |

Form PCT/ISA/210 (second sheet) (July 2022)

**INTERNATIONAL SEARCH REPORT**
Information on patent family members

International application No.

**PCT/CN2023/112025**

| Patent document cited in search report | | | Publication date (day/month/year) | Patent family member(s) | | | Publication date (day/month/year) |
|---|---|---|---|---|---|---|---|
| CN | 115371639 | A | 22 November 2022 | None | | | |
| CN | 115077487 | A | 20 September 2022 | None | | | |
| CN | 115790539 | A | 14 March 2023 | None | | | |
| CN | 116147582 | A | 23 May 2023 | None | | | |
| CN | 114322777 | A | 12 April 2022 | None | | | |
| JP | 2009097985 | A | 07 May 2009 | JP | 5033572 | B2 | 26 September 2012 |
| CN | 116625240 | A | 22 August 2023 | None | | | |
| CN | 107610178 | A | 19 January 2018 | None | | | |
| CN | 113409285 | A | 17 September 2021 | None | | | |
| CN | 113160331 | A | 23 July 2021 | None | | | |

Form PCT/ISA/210 (patent family annex) (July 2022)

**EP 4 421 448 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210962801